(19) Europäisches Patentamt
European Patent Office
Office européen des brevets

(11) **EP 3 161 510 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **15718856.6**

(22) Anmeldetag: **23.04.2015**

(51) Int Cl.:
*G01S 7/35* (2006.01)      *G01S 13/34* (2006.01)
*G01S 13/93* (2020.01)     *G01S 13/58* (2006.01)

(86) Internationale Anmeldenummer:
**PCT/EP2015/058749**

(87) Internationale Veröffentlichungsnummer:
**WO 2015/197222 (30.12.2015 Gazette 2015/52)**

(54) **RADARMESSVERFAHREN**

RADAR MEASURING METHOD

PROCÉDÉ DE MESURE PAR RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 DE 102014212280**

(43) Veröffentlichungstag der Anmeldung:
**03.05.2017 Patentblatt 2017/18**

(73) Patentinhaber: **Robert Bosch GmbH**
**70442 Stuttgart (DE)**

(72) Erfinder:
• **LOESCH, Benedikt**
  **70195 Stuttgart (DE)**
• **SCHOOR, Michael**
  **70195 Stuttgart (DE)**

(56) Entgegenhaltungen:
**DE-A1-102009 000 468      DE-A1-102012 212 888**
**DE-A1-102012 220 879      US-A1- 2012 235 854**

EP 3 161 510 B1

**Beschreibung**

STAND DER TECHNIK

Die Erfindung betrifft ein Verfahren zur Bestimmung einer Relativgeschwindigkeit eines Radarziels.

Weiter betrifft die Erfindung einen Radarsensor, insbesondere für Kraftfahrzeuge, der zur Durchführung dieses Verfahrens ausgebildet ist.

Bei Kraftfahrzeugen werden FMCM-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Bei FMCW-(Frequency Modulated Continuous Wave)-Radarsensoren wird ein Sendesignal verwendet, dessen Sendefrequenz rampenförmig moduliert wird, wobei das Signal während des Verlaufs der Rampe kontinuierlich gesendet wird. Aus einem Empfangssignal wird durch Mischen mit dem Sendesignal ein Basisbandsignal erzeugt, welches abgetastet und ausgewertet wird.

Die Frequenz des Basisbandsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objektes bedingt ist Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands-Geschwindigkeits-Diagramm (d-v-Diagramm) als Gerade darstellen.

Es sind FMCW-Radarsensoren bekannt, bei denen mit einer Sequenz von identischen, verhältnismäßig kurzen Rampen, sogenannten "Rapid Chirps" gearbeitet wird, die im Verhältnis zu ihrer Dauer einen hohen Frequenzhub haben und deshalb so steil sind, dass im Basisbandsignal der abstandsabhängige Anteil der Frequenzverschiebung dominiert, während die Dopplerverschiebung durch die Sequenz der Rampen abgetastet wird. Um innerhalb eines gewünschten Messgebereichs der Relativgeschwindigkeit eine eindeutige Bestimmung der Relativgeschwindigkeit zu gestatten, ist daher eine ausreichend hohe Wiederholrate der kurzen Rampen erforderlich. Insbesondere muss der Zeitversatz zwischen aufeinander folgenden kurzen Rampen kleiner sein als die halbe Periodendauer der Dopplerfrequenz.

Um eine genaue Geschwindigkeits- und Abstandsschätzung von Radarobjekten bei einem möglichst geringen Hardware-Aufwand und Rechenaufwand zu ermöglichen, ist vorgeschlagen worden, nacheinander mehrere Sequenzen von Frequenzmodulationsrampen mit einem zeitlichen Abstand der Rampen zu verwenden, bei dem über die Sequenz der Rampen eine Unterabtastung der Dopplerverschiebung erfolgt, so dass die erhaltene Information über die Relativgeschwindigkeit mit einer Mehrdeutigkeit behaftet ist. Indem die Rampenparameter der Sequenzen unterschiedlich gewählt werden, können aus den unterschiedlichen Sequenzen Relativgeschwindigkeitswerte mit unterschiedlichen Mehrdeutigkeiten und unterschiedlichen linearen Zusammenhängen zwischen Abstand und Geschwindigkeit ermittelt werden. Ein solches Verfahren, bei dem zwei Sequenzen von kurzen Rampen mit unterschiedlicher Rampenwiederholzeit nacheinander gesendet werden, ist beispielsweise aus der DE 10 2012 212 888 A1 bekannt. Durch Abgleichen der für die unterschiedlichen Sequenzen erhaltenen Information wird ein Wert für die Relativgeschwindigkeit eines Objektes bestimmt.

DE 102012220879 A1 beschreibt ein verfahren zur Bestimmung von Abständen und Relativgeschwindigkeiten mehrerer gleichzeitig georteter Objekte mit einem FMCW-Radar, bei dem die Frequenz eines Sendesignals in der Form von sich periodisch wiederholenden Rampen moduliert wird, das Sendesignal mit einem empfangenen Signal zu einem Zwischenfrequenzsignal gemischt wird und zur Bestimmung des Abstands und/oder der Relativgeschwindigkeit der Objekte die Änderung der Phase des Zwischenfrequenzsignals von Rampe zu Rampe ausgewertet wird, wobei das Modulationsmuster mindestens zwei Rampen umfasst, die sich nur um einen festen Frequenzversatz unterscheiden und in einem bestimmten zeitlichen Abstand aufeinanderfolgen, und dass anhand der Phasendifferenz der Zwischenfrequenzsignale für diese beiden Rampen ein eindeutiger Näherungswert für den Objektabstand berechnet wird.

DE 102009000468 A1 beschreibt ein Verfahren zum Detektieren einer Entfernung und einer Geschwindigkeit eines Ziels, bei dem eine Periode einer gesendeten Welle eine Anzahl fortlaufender Rampen umfasst. Eine erste Rampe in der Periode wird über einen ersten Teil des Frequenzbereichs gesendet und eine zweite Rampe in der Periode wird über einen zweiten Teil des Frequenzbereichs gesendet, der von dem ersten Teil verschieden ist. Die zweite Rampe ist um eine Frequenzverschiebung relativ zu der ersten Rampe versetzt. Eine gestreute Welle wird von dem Ziel empfangen und verarbeitet, um die Entfernung und die Geschwindigkeit des Ziels zu bestimmen.

US 2012/0235854 A1 betrifft ein Verfahren zur Detektierung von Entfernung und Geschwindigkeit eines Objekts.

OFFENBARUNG DER ERFINDUNG

Aufgabe der Erfindung ist es, ein Verfahren zur Bestimmung einer Relativgeschwindigkeit eines Radarziels anzugeben, das eine genauere Schätzung der Relativgeschwindigkeit erlaubt

Diese Aufgabe wird erfindungsgemäß gelöst durch Verfahren zur Bestimmung einer Relativgeschwindigkeit eines Radarziels, bei dem:

(a) eine FMCW-Radarmessung ausgeführt wird, bei der ein rampenförmig frequenzmoduliertes Sendesignal gesendet wird, dessen Modulationsmuster eine erste Sequenz von mit einem Zeitintervall zeitversetzt aufeinander folgenden Rampen und wenigstens eine weitere Sequenz von mit demselben Zeitintervall zeitversetzt aufeinander folgenden Rampen umfasst,
wobei die Sequenzen zeitlich ineinander verschachtelt sind, wobei jeweils von denjenigen Rampen der Sequenzen, die einen gleichen, die Rampen in der jeweiligen Sequenz zählenden Rampenindex haben, die Rampe der jeweiligen weiteren Sequenz einen der Sequenz zugeordneten Zeitversatz zu der Rampe der ersten Sequenz aufweist,
wobei empfangene Signale zu Basisbandsignalen heruntergemischt werden,

(b) aus den Basisbandsignalen gesondert für jede der Sequenzen durch zweidimensionale Fourier-Transformation ein zweidimensionales Spektrum berechnet wird, wobei in der ersten Dimension Rampe für Rampe transformiert wird und in der zweiten Dimension über den Rampenindex transformiert wird,

(c) anhand einer Position eines Peaks in wenigstens einem zweidimensionalen Spektrum der Basisbandsignale Werte für die Relativgeschwindigkeit eines Radarziels bestimmt werden, die mit einer vorbestimmten Geschwindigkeitsperiode periodisch sind;

(d) eine Phasenbeziehung zwischen Spektralwerten, die an jeweils der gleichen Position in den gesondert berechneten zweidimensionalen Spektren erhalten werden, überprüft wird auf Übereinstimmung mit für mehrere der bestimmten periodischen Werte der Relativgeschwindigkeit erwarteten Phasenbeziehungen, und

(e) aus den bestimmten, periodischen Werten der Relativgeschwindigkeit anhand des Ergebnisses der Überprüfung ein Schätzwert für die Relativgeschwindigkeit des Radarziels ausgewählt wird.

Die Sequenzen sind zeitlich ineinander verschachtelt. Das heisst, in Lücken zwischen den Rampen einer Sequenz sind Rampen der jeweiligen anderen Sequenz angeordnet Der Begriff "ineinander verschachtelt" wird hier synonym zu den Begriffen "miteinander verzahnt" oder "miteinander verwoben" verwendet

Über die Sequenz der Rampen erfolgt eine Unterabtastung der Dopplerverschiebungsfrequenz, so dass die erhaltene Information über die Relativgeschwindigkeit mit einer Mehrdeutigkeit behaftet ist. Insbesondere ist der Wert der Relativgeschwindigkeit periodisch mit einem Geschwindigkeitsintervall

$$\Delta v = \frac{c}{2 f_0 T_{r2r}} \tag{1}$$

wobei c die Lichtgeschwindigkeit ist, fo die mittlere Sendefrequenz ist und Tr2r das Zeitintervall zwischen den Rampen innerhalb einer Sequenz ist. Aus einer Position eines dem Radarziel zugeordneten Peaks in einem zweidimensionalen Spektrum der abgetasteten Basisbandsignale wird somit ein mit einer Mehrdeutigkeit behafteter Wert der Relativgeschwindigkeit des Radarziels bestimmt. Die Mehrdeutigkeit kann dann aufgelöst werden, indem untersucht wird, wie gut die für die jeweiligen Werte der Relativgeschwindigkeit erwarteten Phasenbeziehungen zwischen den Signalen der Sequenzen übereinstimmen mit der gemessenen Phasenbeziehung. Die erwartete Phasenbeziehung hängt jeweils von der Relativgeschwindigkeit und dem Zeitversatz zwischen den betreffenden Sequenzen ab.

Dies gestattet eine eindeutige Schätzung der Relativgeschwindigkeit innerhalb eines Geschwindigkeitsmessbereichs, der beispielsweise ein Mehrfaches des Eindeutigkeitsbereichs einer Messung mit nur einer der Sequenzen der Rampen sein kann. Vorteilhaft ist insbesondere, dass relativ große Zeitintervalle zwischen den Rampen, d.h. zwischen den Rampenmittelpunkten, einer Sequenz möglich sind, so dass der Hardwareaufwand verringert werden kann oder bei gleichem Hardwareaufwand eine genauere Ortung ermöglicht wird.

Innerhalb einer Periode des Modulationsmusters, deren Länge dem Zeitintervall Tr2r entspricht, sind die Rampen vorzugsweise in ungleichmäßigen Abständen angeordnet, so dass das Modulationsmuster trotz des regelmäßigen Zeitintervalls Tr2r möglichst wenig Symmetrie aufweist. Aufgrund des einheitlichen Zeitintervalls Tr2r wiederholen sich die Zeitversätze zwischen den Rampen unterschiedlicher Sequenzen von Periode zu Periode.

Vorzugsweise wird in dem Schritt (e) des Auswählens eines Schätzwertes für die Relativgeschwindigkeit des Radarziels der Schätzwert für die Relativgeschwindigkeit in einem Messbereich für die Relativgeschwindigkeit eindeutig bestimmt, wobei ein oberer Maximalwert $v_{max}$ des Messbereichs in folgender Beziehung zu dem Zeitabstand Tr2r der Rampenmittelpunkte innerhalb einer Sequenz steht:

$$Tr2r > c/(4f_0 v_{max})$$

wobei c die Lichtgeschwindigkeit ist und $f_0$ die mittlere Sendefrequenz. Dies entspricht einer Unterabtastung einer maximal zu detektierenden Relativgeschwindigkeit $v_{max}$ eines Radarziels durch die jeweilige Sequenz von Rampen mit dem Zeitabstand Tr2r zwischen aufeinanderfolgenden Rampen. Vorzugsweise beträgt Tr2r wenigstens ein Mehrfaches der genannten Größe auf der rechten Seite der Beziehung.

Vorzugsweise wird in dem Schritt (e) des Auswählens eines Schätzwertes für die Relativgeschwindigkeit des Radarziels der Schätzwert für die Relativgeschwindigkeit in einem Messbereich für die Relativgeschwindigkeit eindeutig bestimmt, wobei ein oberer Maximalwert $v_{max}$ des Messbereichs in folgender Beziehung zu dem jeweiligen Zeitversatz T12 der jeweiligen weiteren Sequenz steht:

$$T12 > c/(4f_0 v_{max})$$

Vorzugsweise beträgt T12 wenigstens ein Mehrfaches der genannten Größe auf der rechten Seite der Beziehung. Indem ein solcher relativ großer Zeitversatz T12 zwischen den Sequenzen der Rampen gewählt wird, kann der Hardwareaufwand zur Durchführung des Verfahrens verringert werden, da die resultierende Mehrdeutigkeit der gemessenen Phasenbeziehung zugelassen werden kann. Denn ein eindeutiger Schätzwert für die Relativgeschwindigkeit kann innerhalb des größeren Messbereichs dennoch bestimmt werden.

Vorteilhafte Ausgestaltungen der Erfindung sind in den Unteransprüchen angegeben.

Vorzugsweise haben innerhalb einer jeweiligen Sequenz aufeinanderfolgende Rampen eine gleiche Rampensteigung und eine gleiche Differenz ihrer Rampenmittenfrequenzen sowie besonders bevorzugt einen gleichen Frequenzhub, wobei die besagte Differenz der Rampenmittenfrequenzen optional ungleich Null ist, und wobei Rampen, welche den gleichen Rampenindex in den jeweiligen Sequenzen haben, die gleiche Rampensteigung und die gleiche Rampenmittenfrequenz sowie besonders bevorzugt einen gleichen Frequenzhub aufweisen. Wenn, bis auf die optional ungleich Null gewählte Frequenzdifferenz von Rampe zu Rampe, der Frequenzverlauf aller Rampen aller Sequenzen identisch ist, können die aus der Relativgeschwindigkeit eines Radarziels resultierenden Phasenbeziehungen besonders genau gemessen werden.

Wenn der Zeitversatz zwischen den Sequenzen und der Zeitabstand der Rampen innerhalb einer Sequenz in der gleichen Größenordnung liegen, kann die zur Verfügung stehende Messzeit besonders gut genutzt werden. Außerdem können Einflüsse einer Objektbeschleunigung auf die Phasenbeziehung zwischen den Basisbandsignalen der einzelnen Sequenzen so möglichst klein gehalten werden. Außerdem können so günstige Werte für den Zeitversatz zwischen den Sequenzen und dem Zeitabstand der Rampen innerhalb einer Sequenz gewählt werden, die möglichst "inkommensurabel" sind, also nicht etwa Vielfache voneinander sind. Aus der Auflösung der Mehrdeutigkeit ergibt sich dann ein besonders großer Messbereich für die Relativgeschwindigkeit Dementsprechend enthält das Modulationsmuster Pausen zwischen den Rampen. Inbesondere weist das Modulationsmuster vorzugsweise wenigstens eine Pause auf, die regelmäßig zwischen jeweils zwei aufeinanderfolgenden Rampen einer Sequenz wiederkehrt, mit einem Zeitintervall von Pause zu Pause, das gleich dem Zeitintervall zwischen den Rampen einer Sequenz ist

Vorzugsweise sind während eines überwiegenden Zeitraums des Modulationsmusters abwechselnd Rampen der jeweiligen Sequenzen angeordnet, d.h. die Sequenzen überlappen sich zeitlich weitgehend. Vorzugsweise ist der einer jeweiligen weiteren Sequenz zugeordnete Zeitversatz zwischen den Rampen der weiteren Sequenz und den betreffenden Rampen der ersten Sequenz kleiner als das Zweifache des Zeitintervalls zwischen den Rampen innerhalb einer jeweiligen Sequenz, besonders bevorzugt kleiner als dieses Zeitintervall. Letzteres ist gleichbedeutend damit, dass zwischen zwei aufeinanderfolgenden Rampen der ersten Sequenz stets eine jeweilige Rampe der jeweiligen weiteren Sequenz von Rampen gesendet wird.

Vorzugsweise werden die für jede der Sequenzen gesondert berechneten zweidimensionalen Spektren zu einem zweidimensionalen Spektrum der Basisbandsignale, insbesondere einem Leistungsspektrum, zusammengeführt, welches in dem Schritt (c) des Bestimmens von Werten für die Relativgeschwindigkeit verwendet wird. Das Zusammenführen ist beispielsweise nicht-phasenkohärent, vorzugsweise eine nicht-phasenkohärente Summation der Quadrate der Absolutbeträge der Spektralwerte zu einem Leistungsspektrum. Dadurch kann die Detektion eines Peaks verbessert werden. Insbesondere kann die durch die Aufteilung der zur Verfügung stehenden Messzeit in mehrere Sequenzen von Rampen sowie die Pausen bewirkte Verringerung des Signal-Rausch-Verhältnisses der gesondert berechneten Spektren so größtenteils ausgeglichen werden.

Vorzugsweise wird bei dem Überprüfen der Phasenbeziehung eine Beziehung gemäß der Gleichung

$$\Delta\varphi_{12} = 2\pi\frac{2}{c}f_0 T_{12} v \qquad (2)$$

verwendet, welche eine erwartete Phasendifferenz $\Delta\varphi_{12}$ zwischen einer Phase des Spektralwerts des jeweiligen Spektrums einer weiteren Sequenz und einer Phase des Spektralwerts des Spektrums der ersten Sequenz in Beziehung setzt mit dem der weiteren Sequenz zugeordneten Zeitversatz $T_{12}$ und der Relativgeschwindigkeit v, wobei c die Lichtgeschwindigkeit ist und fo die mittlere Sendefrequenz ist Anstelle von T12 und $\Delta\varphi_{12}$ für die zweite Sequenz kann allgemein T1i bzw. $\Delta\varphi_{1i}$ für die i-te Sequenz, i>1, geschrieben werden.

Vorzugsweise wird bei dem Überprüfen der Phasenbeziehung ein von der Relativgeschwindigkeit v abhängiger Steuerungsvektor a(v) der Messung gemäß der Gleichung

$$a(v) = \frac{1}{\sqrt{I}}\begin{bmatrix} 1 \\ \vdots \\ e^{2\pi j\frac{2}{c}f_0 T_{1i} v} \end{bmatrix} \qquad (3)$$

verwendet, wobei I die Anzahl der Sequenzen ist, i=1,...,I die Sequenzen zählt, und in der i-ten Komponente des Vektors T1i für i>1 der der i-ten Sequenz zugeordete Zeitversatz gegenüber der ersten Sequenz ist Der Steuerungsvektor a(v) ist in dieser Notation ein Spaltenvektor, dessen Komponenten jeweils den erwarteten Phasenunterschied der i-ten Sequenz gegenüber der Teilmessung der ersten Sequenz beschreiben, wobei der erwartete Phasenunterschied jeweils als Phase einer komplexen Exponentialfunktion bestimmt ist Die Anzahl der Komponenten des Vektors ist I. Der gemeinsame Vorfaktor ist ein Normierungsfaktor und beträgt 1, geteilt durch die Quadratwurzel aus der Anzahl I der verwendeten Sequenzen. Im Exponenten der Exponentialfunktion bezeichnet j die imaginäre Einheit, sofern nicht anders angegeben.

Die Kenntnis des Steuerungsvektors a(v) erlaubtes, eine (unter geeigneten Bedingungen eindeutige) Beziehung zwischen der Relativgeschwindigkeit v des Radarziels und den empfangenen komplexen Spektralwerten an der Position des Peaks herzustellen und aus den Phasenbeziehungen der empfangenen Signale auf die Relativgeschwindigkeit v des Radarziels zu schließen. Da in der Praxis die empfangenen Signale jedoch mehr oder weniger verrauscht sein werden, lässt sich die Geschwindigkeit nicht exakt berechnen, sondern lediglich schätzen, beispielsweise mit Hilfe einer Maximum-Likelihood-Schätzung.

Ein Messvektor wird beispielsweise für einen Empfangskanal n definiert als

$$a_m(n) = \begin{bmatrix} x_1(n) \\ \vdots \\ x_I(n) \end{bmatrix} \qquad (4)$$

wobei mit i=1,...,I, in der i-ten Komponente des Vektors $x_i(n)$ einen komplexen Spektralwert des zweidimensionalen Spektrums des der abgetasteten Basisbandsignale der i-ten Sequenz von Rampen des Empfangskanals n bezeichnet, wobei n die Empfangskanäle zählt mit n=1,...,N bei N Empfangskanälen.

KURZBESCHREIBUNG DER ZEICHNUNGEN

Im folgenden werden Ausführungsbeispiele anhand der Zeichnung näher erläutert Es zeigen:

Fig. 1  ein Blockdiagramm eines FMCW-Radarsystems;
Fig. 2  ein Modulationsmuster mit zwei Sequenzen gleichartiger Rampen, die mit einem Zeitversatz T12 gesendet werden;
Fig. 3  ein Geschwindigkeits/Abstands-Diagramm mit mit einem vorbestimmten Intervall periodischen Werten der Relativgeschwindigkeit eines Radarziels;

Fig. 4    ein Diagramm einer Likelihood-Funktion für den Parameter der Relativgeschwindigkeit; und

Fig. 5    ein detaillierteres Blockdiagramm einer Auswerteeinrichtung eines FMCW-Radarsensors.

## DETAILLIERTE BESCHREIBUNG VON AUSFÜHRUNGSBEISPIELEN

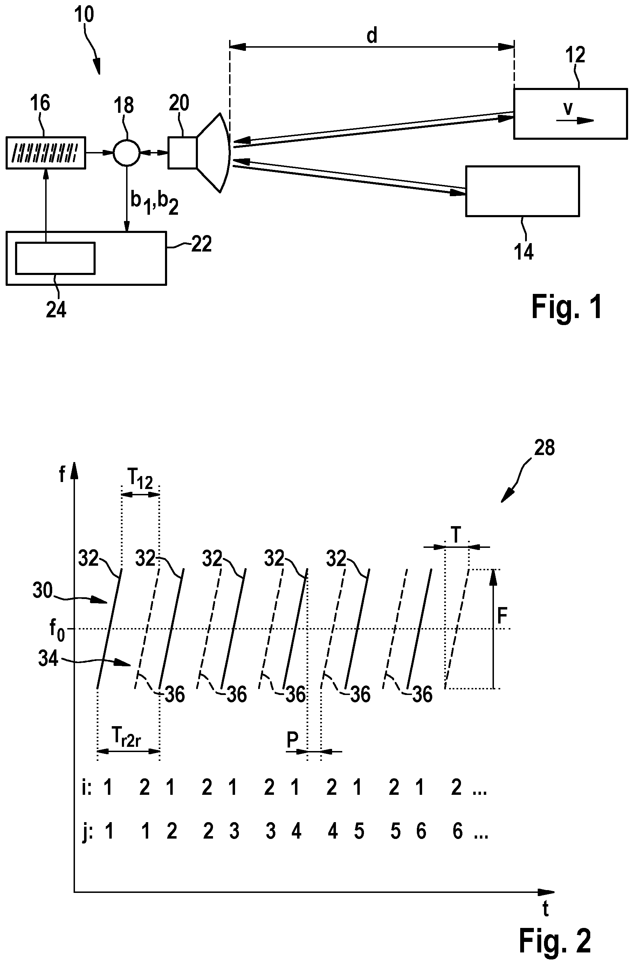

In Fig. 1 ist als vereinfachtes Blocksdiagramm ein FMCW-Radarsensor 10 dargestellt, der beispielsweise vorn in einem Kraftfahrzeug eingebaut ist und dazu dient, Abstände d und Relativgeschwindigkeiten v von Objekten 12, 14 zu messen, beispielsweise von vorausfahrenden Fahrzeugen. Der Radarsensor 10 weist einen spannungsgesteuerten Oszillator 16 auf, der ein frequenzmoduliertes Sendesignal über einen Mischer 18 an eine Sende- und Empfangseinrichtung 20 liefert, von der das Signal in Richtung auf die Objekte 12, 14 ausgesandt wird. Das an den Objekten reflektierte Signal wird von der Sende- und Empfangseinrichtung 20 empfangen und im Mischer 18 mit einem Anteil des Sendesignals gemischt Auf diese Weise erhält man ein Basisbandsignal b, das in einer elektronischen Auswert- und Steuereinrichtung 22 weiter ausgewertet wird. Die Steuer- und Auswerteeinrichtung 22 enthält einen Steuerungsteil 24, der die Funktion des Oszillators 16 steuert. Die Frequenz des vom Oszillator gelieferten Sendesignals wird innerhalb einer Radarmessung mit Sequenzen von steigenden oder fallenden Rampen moduliert.

Fig. 2 zeigt die Sendefrequenz f des Sendesignals 28 aufgetragen über der Zeit t Bei einer Messung werden mit einer Sendeantenne zwei Sequenzen von Rampen mit identischen Rampenparametern gesendet, die ineinander zeitlich verschachtelt sind. Eine erste Sequenz 30 von Rampen 32 ist in Fig. 2 mit durchgezogenen Linien dargestellt, während eine zweite Sequenz 34 von Rampen 36 mit gestrichelten Linien dargestellt ist. Die Nummer i der Sequenz, zu der eine Rampe gehört, und der jeweilige Rampenindex j der Rampe innerhalb einer Sequenz sind angegeben.

Die Rampen 36 der zweiten Sequenz 34 sind jeweils gegenüber den Rampen 32 der ersten Sequenz 30 mit gleichem Rampenindex j um einen Zeitversatz T12 verschoben. Innerhalb jeder Sequenz 30, 34 sind die aufeinanderfolgenden Rampen 32 bzw. 36 zueinander um einen Zeitabstand Tr2r verschoben. Der Zeitabstand Tr2r ist also für beide Sequenzen gleich. Weiter ist eine Pause P jeweils zwischen zwei aufeinanderfolgenden Rampen einer Sequenz vorhanden.

In dem in Fig. 2 dargestellten Beispiel ist die Differenz der Rampenmittenfrequenzen von innerhalb einer Sequenz 30, 34 aufeinanderfolgenden Rampen 32 bzw. 36 gleich Null. Daher haben alle Rampen denselben Frequenzverlauf. Die Rampenmittenfrequenz entpricht hier der mittleren Sendefrequenz fo.

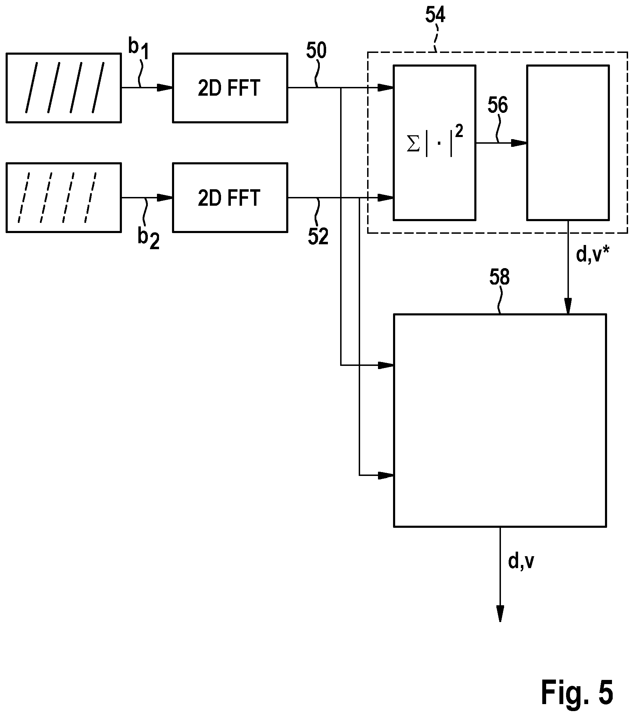

Fig. 5 zeigt schematisch ein detaillierteres Blockdiagramm der von der Steuer- und Auswerteeinheit 22 durchgeführten Bestimmung der Relativgeschwindigkeit

Die empfangenen, abgetasteten Basisbandsignale b1 und b2, die jeweils für die entsprechende Sequenz 30, 34 der Rampen erhalten werden, werden jeweils einer zweidimensionalen Fourier-Transformation (2D-FFT) unterzogen. Die erste Dimension entspricht einer Transformation der zu den einzelnen Rampen erhaltenen Basisbandsignale. Die zweite Dimension entspricht einer Transformation über die Sequenz der Rampen, d.h. über den Rampenindex j. Die Größen der jeweiligen Transformationen, d.h. die jeweiligen Anzahlen der bins (Abtastpunkte oder Stützstellen), sind vorzugsweise für die erste Dimension einheitlich für alle Spektren, und für die zweite Dimension einheitlich für alle Spektren.

Aufgrund der Relativgeschwindigkeitv des Radarziels 12 und dem Zeitversatz T12 zwischen den einzelnen Sequenzen von Rampen entsprechenden Teilmessungen, tritt ein Phasenunterschied zwischen den zwei Teilmessun- gen auf. Der Phasenunterschied $\Delta\varphi_{12}$ ist in Gleichung (2) angegeben. Der Phasenunterschied zwischen den zwei Teilmessungen wird dabei als Phasenunterschied zwischen den komplexen Amplituden (Spektralwerten) eines in beiden zweidimensionalen Spektren 50, 52 an der gleichen Position auftretenden Peaks erhalten. Aufgrund des relativ großen Zeitversatzes T12, zwischen den einander entsprechenden Rampen 32, 36 der beiden Sequenzen 30, 34 erlaubt die Bestimmung des Phasenunterschieds zwischen den beiden Teilmessungen jedoch keinen direkten Rückschluss auf die Relativgeschwindigkeit v. Denn aufgrund der Periodizität der Phasen ergibt sich für einen einzelnen Phasenunterschied eine Mehrdeutigkeit für den dazugehörigen Wert der Relativgeschwindigkeit v.

Die erhaltenen zweidimensionalen Spektren 50 bzw. 52 werden einem ersten Funktionsblock 54 zugeführt, der aus den komplexen Spektren jeweils ein Leistungsspektrum berechnet durch Bildung des Quadrates des Absolutbetrags der jeweiligen Spektralwerte, und die beiden Leistungsspektren durch Summation oder Mittelung punktweise zusammenführt zu einem integrierten zweidimensionalen Leistungsspektrum 56.

Die Position eines einem Radarziel 12 entsprechenden Peaks im Leistungsspektrum 56, die nachfolgend als Bin k, l angegeben wird, entspricht der Position des Peaks in den einzelnen Spektren 50, 52. Aus der ersten Dimension, entsprechend dem Bin k der Position des Peaks, wird gemäß der FMCW-Gleichung $k = 2/c(dF + f_0 vT)$, ein linearer Zusammenhang zwischen der Relativgeschwindigkeit v und dem Abstand d des Radarziels erhalten. Dabei ist c die Lichtgeschwindigkeit, F der Rampenhub, T die Rampendauer einer einzelnen Rampe 32 bzw. 36 und fo die mittlere Sendefrequenz. Wenn die Frequenzdifferenz von aufeinanderfolgenden Rampen einer Sequenz gleich Null ist, enthält die Peakposition in der zweiten Dimension l nur Information über die Relativgeschwindigkeit v des Radarziels.

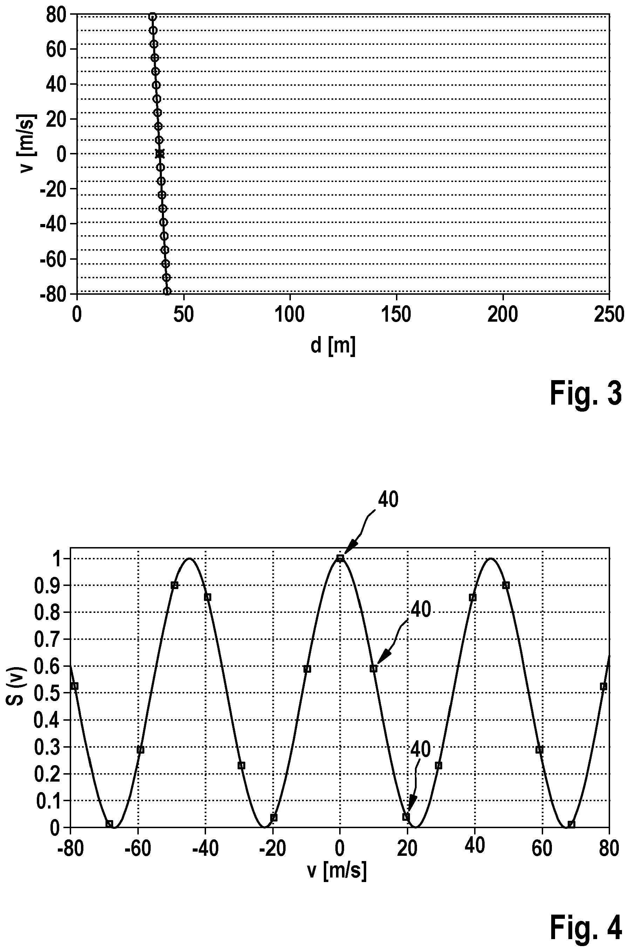

Fig. 3 zeigt schematisch ein Diagramm, in dem die Relativgeschwindigkeit v über dem Abstand d aufgetragen ist. Die lineare Beziehung zwischen v und d ist als Gerade eingezeichnet Im dargestellten Beispiel ist aufgrund eines relativ großen Zeitabstandes Tr2r die aus der Abtastung der Dopplerfrequenz erhaltene Information über die Relativgeschwindigkeit des Radarziels mit einer Mehrdeutigkeit gemäß dem vorbestimmten Intervall nach Gleichung (1) behaftet, da die aus der Relativbewegung mit der Geschwindigkeit v resultierende Dopplerfrequenz durch die relativ großen Zeitabstände Tr2r nicht eindeutig abgetastet wird. Zusätzlich zu der v-d-Geraden, die sich gemäß dem Frequenzbin k ergibt, sind die aus dem Frequenzbin l bestimmten, periodischen Werte der Relativgeschwindigkeit v durch gestrichelte Linien dargestellt. Die Schnittpunkte mit der v-d-Geraden sind gekennzeichnet. Sie entsprechen möglichen Wertepaaren (v, d) von Relativgeschwindigkeit und Abstand des detektierten Radarziels 12. Das tatsächliche Ziel, dessen Geschwindigkeit v bestimmt werden soll, ist in Fig. 3 durch ein Kreuz X markiert.

Die Mehrdeutigkeit der ermittelten Geschwindigkeit v wird nun aufgelöst, wie nachfolgend erläutert wird. Die Information v* über die in Frage kommenden, periodischen Werte der Relativgeschwindigkeit v wird an einen zweiten Funktionsblock 58 übergeben, der außerdem die komplexen, zweidimensionalen Spektren 50, 52 der Teilmessungen erhält

Zur Auswertung des gemessenen Phasenunterschieds wird ein Steuerungsvektor a(v) einer idealen Messung in Abhängigkeit der Relativgeschwindigkeit v berechnet gemäß der Gleichung (3), die hier für zwei Sequenzen lautet:

$$a(v) = \frac{1}{\sqrt{2}} \left( e^{2\pi j \frac{2}{c} f_0 T_{12} v} \right)$$

Der Messvektor $a_m$ ist entsprechend definiert, wobei anstelle der erwarteten, geschwindigkeitsabhängigen komplexen Werte die komplexen Amplituden (Spektralwerte) an der Position des Peaks der berechneten zweidimensionalen Spektren der Teilmessungen als Komponenten des Vektors eingesetzt werden, wie in Gleichung (4) angegeben; eine Normierung erfolgt in der nachfolgenden Definition einer Likelihood-Funktion.

Basierend auf den Messvektor und dem Steuerungsvektor wird eine normierte Likelihood-Funktion in Form eines Relativgeschwindigkeitsspektrums S(v) definiert als:

$$S(v) = \frac{1}{\left| a_m^H \right|^2} \left| a_m^H a(v) \right|^2$$

Dabei bezeichnet $a_m^H$ den hermetisch adjungierten Vektor zum Messvektor $a_m$, also einen Zeilenvektor, bei dem die einzelnen Komponenten komplex konjugiert zu den Komponenten des Vektors $a_m$ sind.

Fig. 4 zeigt schematisch mit einer durchgezogenen, sinusförmigen Linie das Relativgeschwindigkeitsspektrum S(v) über der Relativgeschwindigkeit v. Die Maxima der Likelihood-Funktion entsprechen den wahrscheinlichsten Werten des Parameters v. Für sich alleine genommen ist das Relativgeschwindigkeitsspektrum S(v) mehrdeutig; ein Maximum bei dem Maximalwert 1 entspricht jeweils einer optimalen Übereinstimmung der sich für die betreffende Relativgeschwindigkeit v ergebenden, idealen Phasenverschiebungen mit der gemessenen Phasenverschiebung gemäß dem Messvektor.

Eine Auswertung der Funktion S(v) ist jedoch lediglich an den Stellen 40 erforderlich, die den periodischen Werten der Relativgeschwindigkeit v entsprechen, die aus den Auswertungen gemäß der Position des Peaks in den Bins (k, l) erhalten wurden. Diese Stellen 40, die den Geschwindigkeitswerten der in Fig. 3 markierten Schnittpunkte entsprechen, sind in Fig. 4 auf den Kurvenverlauf der Funktion S(v) markiert. Im dargestellten Beispiel ergibt sich eine maximale Übereinstimmung bei einer Relativgeschwindigkeit v = 0 m/s, wo die Funktion S(v) den erwarteten Maximalwert 1 annimmt. Dies entspricht dem tatsächlichen Wert der Relativgeschwindigkeit v.

Die Mehrdeutigkeit, die sich aus der Position des Peaks ergibt, kann somit durch die zusätzliche Information aus der Phasenbeziehung aufgelöst werden. Anhand des linearen Zusammenhangs wird ein zu dem ausgewählten Schätzwert für die Relativgeschwindigkeit v gehörender Schätzwert für den Abstand d bestimmt.

Der zweite Funktionsblock 58 gibt die ermittelten Schätzwerte für die Relativgeschwindigkeit v und den Abstand d aus.

Die den unterschiedlichen Sequenzen von Rampen entsprechenden Zeitsignale (Basisbandsignale) werden somit zunächst getrennt verarbeitet Die Detektion eines Radarziels 12 findet dann in dem durch nicht-kohärente Integration gewonnenen Leistungsspektrum 56 statt Basierend auf der Detektion und den komplexen Amplituden an der Position des Peaks wird dann die Mehrdeutigkeit der Geschwindigkeit v aufgelöst.

Das beschriebene Verfahren kann erweitert werden für das Ausführen einer Radarmessung mit mehreren Empfangskanälen eines Radarsensors. Beispielsweise können mehrere Antennenelemente der Sende- und Empfangseinheit 20 einem jeweiligen Empfangskanal zugeordnet sein. Je Kanal wird dann für den n-ten Kanal ein Messvektor $a_m(n)$ gemäß Gleichung (4) erhalten.

Der zweite Funktionsblock 58 kann beispielsweise die komplexen Amplituden der Peaks an einen Winkelschätzer ausgeben.

Gemäß der in Anspruch 8 angegebenen Likelihood-Funktion in Form des Relativgeschwindigkeitsspektrums S(v) wird dann untersucht, in wieweit in den jeweiligen Kanälen gemessenen Phasenbeziehungen mit den für die jeweilige Relativgeschwindigkeit v erwarteten Phasenbeziehungen des Kanals übereinstimmt. Vorzugsweise wird die nicht-kohärente Zusammenführung der Spektren zum Leistungsspektrum 56 für alle Kanäle gemeinsam durchgeführt.

Weiter kann das beschriebene Verfahren auch modifiziert werden, indem eine erste Sequenz 30 von Rampen 32 und wenigstens zwei weitere Sequenzen i=2, i=3 von Rampen zeitlich verschachtelt gesendet werden. Dabei haben die weiteren Sequenzen von Rampen einen unterschiedlichen Zeitversatz zu der ersten Sequenz. Beispielsweise unterscheidet sich ein Zeitversatz T13 zwischen einer Rampe der dritten Sequenz und der entsprechenden Rampe der ersten Sequenz von dem Zeitversatz T12. Dadurch können die Mehrdeutigkeiten noch besser unterdrückt werden, so dass ein größerer Zeitabstand Tr2r ermöglicht wird.

In Einzelfällen kann es vorkommen, dass zwei Radarziele mit unterschiedlichem Abstand und unterschiedlicher Geschwindigkeit dieselbe Peakposition (k,l) in dem Spektrum 56 belegen. Die gemessene Phasenbeziehung lässt sich dann nicht einer einzigen Relativgeschwindigkeit eines einzigen Radarziels zuordnen. Die Auswerteeinrichtung 22 kann dazu eingerichtet sein, eine solche Störung der Messung zu erkennen anhand einer einen Schwellwert überschreitenden Abweichung der maximalen Übereinstimmung, d.h. dem Maximalwert des Relativgeschwindigkeitsspektrums S(v), von dem zu erwartenden Maximalwert 1. In diesem Fall kann beispielsweise der zweite Funktionsblock 58 ein Störungssignal ausgeben. Eine vorübergehend auftretende Mehrfachbelegung eines Peaks im zweidimensionalen Leistungsspektrum kann aber auch daran erkannt werden, dass die Auswerteeinrichtung 22 bei einem anhand der geschätzten Werte von v und d eins Radarziels 12 durchgeführten Trackings von detektierten Objekten über mehrere Messzyklen eine Fehldetektion erkannt wird.

Vorzugsweise werden für mehrere, nacheinander ausgeführte Radarmessungen unterschiedlichen Modulationsparameter der Rampen verwendet, beispielsweise unterschiedliche Mittenfrequenzen, Rampensteigungen, Zeitabstände Tr2r und/oder Zeitversätze T12. Dadurch können zufällige Mehrfachbelegungen von Peakpositionen auf Einzelfälle beschränkt werden.

Anstelle einer nicht-kohärenten Zusammenführung der einzelnen Spektren zu dem Leistungsspektrum 56 ist es auch denkbar, Empfangskanäle n mittels digitaler Strahlformung (beam forming) zu einem Empfangskanal zusammenzufassen. Dabei werden z.B. die Spektren bzw. Messvektoren von N Empfangskanälen kohärent, d.h. unter Berücksichtigung der Phase, mit jeweiligen Gewichtungsfaktoren addiert In den Beziehungen für S(v) entfallen dann dementsprechend die Summationen über n.

**Patentansprüche**

1. Verfahren zur Bestimmung einer Relativgeschwindigkeit (v) eines Radarziels (12), bei dem:

(a) eine FMCW-Radarmessung ausgeführt wird, bei der ein rampenförmig frequenzmoduliertes Sendesignal (28) gesendet wird, dessen Modulationsmuster eine erste Sequenz (30) von mit einem Zeitintervall (Tr2r) zeitversetzt aufeinander folgenden Rampen (32) und wenigstens eine weitere Sequenz (34) von mit demselben Zeitintervall (Tr2r) zeitversetzt aufeinander folgenden Rampen (36) umfasst, wobei die Sequenzen (30; 34) zeitlich ineinander verschachtelt sind, wobei jeweils von denjenigen Rampen der Sequenzen, die einen gleichen, die Rampen in der jeweiligen Sequenz zählenden Rampenindex (j) haben, die Rampe der jeweiligen weiteren Sequenz (34) einen der Sequenz zugeordneten Zeitversatz (T12) zu der Rampe der ersten Sequenz aufweist, wobei empfangene Signale zu Basisbandsignalen (b1; b2) heruntergemischt werden, und
(b) aus den Basisbandsignalen (b1; b2) gesondert für jede der Sequenzen (30; 34) durch zweidimensionale Fourier-Transformation ein zweidimensionales Spektrum (50; 52) berechnet wird, wobei in der ersten Dimension Rampe für Rampe transformiert wird und in der zweiten Dimension über den Rampenindex (j) transformiert wird, **dadurch gekennzeichnet, dass**
(c) anhand einer Position (k, l) eines Peaks in wenigstens einem zweidimensionalen Spektrum (56) der Basisbandsignale (b1; b2) Werte für die Relativgeschwindigkeit (v) eines Radarziels (12) bestimmt werden, die mit einer vorbestimmten Geschwindigkeitsperiode periodisch sind,
(d) eine Phasenbeziehung zwischen Spektralwerten, die an jeweils der gleichen Position (k, l) in den gesondert berechneten zweidimensionalen Spektren (50; 52) erhalten werden, überprüft wird auf Übereinstimmung mit für mehrere der bestimmten periodischen Werte der Relativgeschwindigkeit (v) erwarteten Phasenbeziehungen (a(v)), und

(e) aus den bestimmten, periodischen Werten der Relativgeschwindigkeit (v) anhand des Ergebnisses der Überprüfung ein Schätzwert für die Relativgeschwindigkeit (v) des Radarziels (12) ausgewählt wird.

2. Verfahren nach Anspruch 1, bei dem innerhalb einer jeweiligen Sequenz (30; 34) aufeinanderfolgende Rampen (32; 36) eine gleiche Rampensteigung (F/T) haben und eine gleiche Differenz ihrer Rampenmittenfrequenzen haben, wobei die besagte Differenz der Rampenmittenfrequenzen optional ungleich Null ist, und
wobei Rampen (32; 36), welche den gleichen Rampenindex (j) in den jeweiligen Sequenzen (30; 34) haben, die gleiche Rampensteigung (F/T) und die gleiche Rampenmittenfrequenz aufweisen.

3. Verfahren nach Anspruch 1 oder 2, bei dem der besagte, einer jeweiligen weiteren Sequenz zugeordnete Zeitversatz (T12) zwischen den Rampen (36) der weiteren Sequenz (34) und den betreffenden Rampen (32) der ersten Sequenz (30) kleiner ist als das Zweifache des Zeitintervalls (Tr2r) zwischen den Rampen innerhalb einer jeweiligen Sequenz (30; 34).

4. Verfahren nach einem der vorstehenden Ansprüche, bei die Rampen (32; 36) der Sequenzen (30; 34) den gleichen Frequenzhub (F) haben.

5. Verfahren nach einem der vorstehenden'Ansprüche, bei dem die für jede der Sequenzen (30; 34) gesondert berechneten zweidimensionalen Spektren (50; 52) zu einem zweidimensionalen Spektrum (56) der Basisbandsignale (b1; b2) zusammengeführt werden, welches in dem Schritt (c) des Bestimmens von Werten für die Relativgeschwindigkeit (v) verwendet wird.

6. Verfahren nach einem der vorstehenden Ansprüche, wobei bei dem Überprüfen der Phasenbeziehung eine Beziehung gemäß der Gleichung

$$\Delta\varphi_{12} = 2\pi \frac{2}{c} f_0 T_{12} v$$

verwendet wird, welche eine erwartete Phasendifferenz $\Delta\varphi_{12}$ zwischen einer Phase des Spektralwerts des jeweiligen Spektrums (52) einer weiteren Sequenz (34) und einer Phase des Spektralwerts des Spektrums (50) der ersten Sequenz (30) in Beziehung setzt mit dem der weiteren Sequenz (34) zugeordneten Zeitversatz T12 und der Relativgeschwindigkeit v, wobei c die Lichtgeschwindigkeit ist und $f_0$ die mittlere Sendefrequenz ist.

7. Verfahren nach einem der vorstehenden Ansprüche, wobei bei dem Überprüfen der Phasenbeziehung auf Übereinstimmung mit erwarteten Phasenbeziehungen das Quadrat eines Absolutbetrags eines komplexen Skalarproduktes $a_m^H a(v)$ eines Messvektors $a_m$ mit einem von dem Wert v der Relativgeschwindigkeit abhängigen Steuerungsvektor a(v) berechnet wird, wobei die Komponenten des Messvektors $a_m$ die Spektralwerte der für die Sequenzen gesondert berechneten Spektren (50; 52) an der Position (k,l) des Peaks sind, wobei $a_m^H$ der hermitesch adjungierte Vektor zu $a_m$ ist, und wobei der Steuerungsvektor a(v) ein Steuerungsvektor einer idealen Messung für ein Radarziel mit einer Relativgeschwindigkeit v ist, wobei die Komponenten des Steuerungsvektors a(v) bis auf einen gemeinsamen Normierungsfaktor jeweils die für den der jeweiligen Sequenz (34) zugeordneten Zeitversatz (T12) erwartete Phasendifferenz ($\Delta\varphi_{12}$) zur ersten Sequenz (30) sind, wobei die erste Komponente des Steuerungsvektors a(v) bis auf den gemeinsamen Normierungsfaktor gleich 1 ist.

8. Verfahren nach einem der vorstehenden Ansprüche, wobei bei dem Überprüfen der Phasenbeziehung auf Übereinstimmung mit erwarteten Phasenbeziehungen ein jeweiliger Grad einer Übereinstimmung S(v) bestimmt wird gemäß der Beziehung:

$$S(v) = \frac{1}{\sum_{n=1}^{N} \left| a_m^H(n) \right|^2} \sum_{n=1}^{N} \left| a_m^H(n) a(v) \right|^2$$

wobei N eine Anzahl von verwendeten Empfangskanäle n=1,..,N ist, $a_m(n)$ ein Messvektor ist, dessen Komponenten die Spektralwerte der für die Basisbandsignale (b1; b2) der einzelnen Sequenzen (30; 34) und für die einzelnen Empfangskanäle n jeweils gesondert berechneten Spektren (50; 52) an der Position (k,l) des Peaks sind, $a_m^H(n)$ der hermitesch adjungierte Vektor zu $a_m(n)$ ist, und a(v) ein Steuerungsvektor der idealen Messung für ein Radarziel mit einer Relativgeschwindigkeit v ist.

9.  Verfahren nach einem der vorstehenden Ansprüche, bei dem im Falle einer Störung der Phasenbeziehung zwischen den besagten Spektralwerten, die einer Situation entspricht, in welcher zwei Radarziele mit unterschiedlicher Relativgeschwindigkeit die gleiche Position (k,l) in dem wenigstens einen zweidimensionalen Spektrum (56) belegen, das Vorliegen der Störung daran erkannt wird, dass ein erwarteter Grad der Übereinstimmung der Phasenbeziehung mit den erwarteten Phasenbeziehungen nicht erreicht wird.

10. Verfahren nach einem der vorstehenden Ansprüche, bei dem anhand einer Position (k) des Peaks in der ersten Dimension des wenigstens einen zweidimensionalen Spektrums (56) ein linearer Zusammenhang zwischen dem Abstand (d) und der Relativgeschwindigkeit (v) des Radarziels (12) bestimmt wird und anhand einer Position (l) des Peaks in der zweiten Dimension des wenigstens einen zweidimensionalen Spektrums (56) zumindest die Werte für die Relativgeschwindigkeit (v) des Radarziels (12) bestimmt werden, die mit der vorbestimmten Geschwindigkeitsperiode periodisch sind.

11. FMCW-Radarsensor mit einer Steuer- und Auswerteeinrichtung (22), in der ein Verfahren nach einem der Ansprüche 1 bis 10 implementiert ist.

## Claims

1.  Method for determining a relative speed (v) of a radar target (12), wherein:

    (a) an FMCW radar measurement is carried out, in which a ramp-shaped frequency-modulated transmission signal (28) is transmitted, the modulation pattern of which comprises a first sequence (30) of successive ramps (32), which are offset in time by a time interval (Tr2r), and at least one further sequence (34) of successive ramps (36), which are offset in time by the same time interval (Tr2r),
    wherein the sequences (30; 34) are nested within one another in time, wherein, respectively of those ramps in the sequences that have the same ramp index (j) which counts the ramps of the respective sequence, the ramp in the respective further sequence (34) has a time offset (T12), assigned to the sequence, from the ramp in the first sequence,
    wherein received signals are mixed down to baseband signals (b1; b2), and
    (b) a two-dimensional spectrum (50; 52) is calculated from the baseband signals (b1; b2), separately for each of the sequences (30; 34), by way of a two-dimensional Fourier transform, wherein there is a ramp-by-ramp transformation in the first dimension and a transformation by the ramp index (j) in the second dimension,
    **characterized in that**
    (c) values for the relative speed (v) of a radar target (12), which are periodic with a predetermined speed period, are determined on the basis of a position (k, 1) of a peak in at least one two-dimensional spectrum (56) of the baseband signals (b1; b2),
    (d) a phase relationship between spectral values obtained in each case at the same position (k, 1) in the separately calculated two-dimensional spectra (50; 52) is checked in respect of a correspondence with phase relationships (a(v)) that are expected for a plurality of the determined periodic values of the relative speed (v), and
    (e) an estimate for the relative speed (v) of the radar target (12) is selected from the determined, periodic values of the relative speed (v) on the basis of the result of the check.

2.  Method according to Claim 1, wherein successive ramps (32; 36) within a respective sequence (30; 34) have the same ramp slope (F/T) and the same difference in their ramp mid-frequencies,
wherein said difference in the ramp mid-frequencies is optionally not equal to zero, and
wherein ramps (32; 36) that have the same ramp index (j) in the respective sequences (30; 34) have the same ramp slope (F/T) and the same ramp mid-frequency.

3. Method according to Claim 1 or 2, wherein said time offset (T12), assigned to a respective further sequence, between the ramps (36) in the further sequence (34) and the relevant ramps (32) in the first sequence (30) is less than twice the time interval (Tr2r) between the ramps within the respective sequence (30; 34).

4. Method according to any one of the preceding claims, wherein the ramps (32; 36) in the sequences (30; 34) have the same frequency deviation (F).

5. Method according to any one of the preceding claims, wherein the two-dimensional spectra (50; 52), calculated separately for each of the sequences (30; 34), are combined to form a two-dimensional spectrum (56) of the baseband signals (b1; b2), which spectrum is used in step (c) of determining values for the relative speed (v).

6. Method according to any one of the preceding claims, wherein, when checking the phase relationship, a relationship according to the equation

$$\Delta\varphi_{12} = 2\pi\frac{2}{c}f_0 T_{12} v$$

is used, said relationship equating an expected phase difference $\Delta\varphi_{12}$ between a phase of the spectral value of the respective spectrum (52) of a further sequence (34) and a phase of the spectral value of the spectrum (50) of the first sequence (30) to the time offset T12 assigned to the further sequence (34) and the relative speed v, where c is the speed of light and $f_0$ is the central transmission frequency.

7. Method according to any one of the preceding claims, wherein, when checking the phase relationship for a correspondence with expected phase relationships, the square of an absolute value of a complex scalar product $a_m^H a(v)$ of a measurement vector $a_m$ is calculated with a control vector a(v) that depends on the value v of the relative speed, wherein the components of the measurement vector $a_m$ are the spectral values of the spectra (50; 52), calculated separately for the sequences, at the position (k, 1) of the peak, where $a_m^H$ is the Hermitian transpose of $a_m$ and where the control vector a(v) is a control vector of an ideal measurement for a radar target with the relative speed v, wherein the components of the control vector a(v), apart from a common normalization factor, are each the phase difference ($\Delta\varphi_{12}$) with respect to the first sequence (30) expected for the time offset (T12) assigned to the respective sequence (34), wherein the first component of the control vector a(v) equals 1 apart from the common normalization factor.

8. Method according to any one of the preceding claims, wherein, when checking the phase relationship for a correspondence with expected phase relationships, a respective degree of correspondence S(v) is determined according to the relationship:

$$S(V) = \frac{1}{\sum_{n=1}^{N}|a_m^H(n)|^2}\sum_{n=1}^{N}|a_m^H(n)a(v)|^2$$

where N is a number of employed receiver channels n = 1, ..., N, $a_m$(n) is a measurement vector, the components of which are the spectral values of the spectra (50; 52), in each case calculated separately for the baseband signals (b1; b2) of the individual sequences (30; 34) and for the individual receiver channels n, at the position (k, 1) of the peak, $a_m^H$ is the Hermitian transpose of $a_{m(n)}$, and a(v) is a control vector of an ideal measurement for a radar target with the relative speed v.

9. Method according to any one of the preceding claims, wherein, in the case of a disturbance in the phase relationship between said spectral values corresponding to a situation in which two radar targets with different relative speeds occupy the same position (k, 1) in the at least one two-dimensional spectrum (56), the presence of the disturbance is identified on the basis of an expected degree of correspondence of the phase relationship with the expected phase relationships not being achieved.

10. Method according to any one of the preceding claims, wherein a linear relationship between the distance (d) and the relative speed (v) of the radar target (12) is determined on the basis of a position (k) of the peak in the first dimension of the at least one two-dimensional spectrum (56) and at least the values for the relative speed (v) of the radar target (12) that are periodic with the predetermined speed period are determined on the basis of a position (1) of the peak in the second dimension of the at least one two-dimensional spectrum (56).

11. FMCW radar sensor comprising a control and evaluation device (22), in which a method according to any one of Claims 1 to 10 is implemented.

**Revendications**

1. Procédé de détermination d'une vitesse relative (v) d'une cible de radar (12), avec lequel :

(a) une mesure de radar FMCW est exécutée, lors de laquelle un signal d'émission (28) modulé en fréquence en forme de rampe est émis, dont le modèle de modulation comprend une première séquence (30) de rampes (32) consécutives décalées dans le temps par un intervalle de temps (Tr2r) et au moins une séquence supplémentaire (34) de rampes (36) consécutives décalées dans le temps par le même intervalle de temps (Tr2r), les séquences (30 ; 34) étant imbriquées temporellement les unes dans les autres, parmi les rampes des séquences qui possèdent un même indice de rampe (j) de comptage des rampes dans la séquence respective, la rampe de la séquence supplémentaire (34) respective présentant un décalage de temps (T12) associé à la séquence par rapport à la rampe de la première séquence, les signaux reçus faisant l'objet d'un mélange réducteur en des signaux en bande de base (b1 ; b2), et

(b) un spectre bidimensionnel (50 ; 52) est calculé à partir des signaux en bande de base (b1 ; b2) séparément pour chacune des séquences (30 ; 34) par une transformation de Fourier bidimensionnelle, la transformation dans la première dimension étant effectuée rampe pour rampe et dans la deuxième dimension par le biais de l'indice de rampe (j),

**caractérisé en ce que**

(c) des valeurs pour la vitesse relative (v) d'une cible de radar (12) sont déterminées au moyen d'une position (k, 1) d'une crête dans au moins un spectre bidimensionnel (56) des signaux en bande de base (b1 ; b2), lesquelles sont périodique avec une période de vitesse prédéterminée,

(d) un déphasage entre les valeurs spectrales qui sont obtenues respectivement à la même position (k, 1) dans un spectre bidimensionnel (50 ; 52) calculé séparément est contrôlé afin de vérifier la concordance avec des déphasages (a(v)) attendus pour plusieurs des valeurs périodiques déterminées de la vitesse relative (v), et

(e) une valeur estimée pour la vitesse relative (v) de la cible de radar (12) est sélectionnée à partir des valeurs périodiques déterminées de la vitesse relative (v) à l'aide du résultat du contrôle.

2. Procédé selon la revendication 1, avec lequel les rampes (32 ; 36) consécutives au sein d'une séquence (30 ; 34) respective possèdent une pente de rampe (F/T) identique et une différence identique de leurs fréquences centrales de rampe, ladite différence des fréquences centrales de rampe étant facultativement différente de zéro et les rampes (32 ; 36) qui possèdent le même indice de rampe (j) dans les séquences (30 ; 34) respectives présentant la même pente de rampe (F/T) et la même fréquence centrale de rampe.

3. Procédé selon la revendication 1 ou 2, avec lequel ledit décalage de temps (T12), associé à une séquence supplémentaire respective, entre les rampes (36) de la séquence supplémentaire (34) et les rampes (32) concernées de la première séquence (30) est inférieur au double de l'intervalle de temps (Tr2r) entre les rampes au sein d'une séquence (30 ; 34) respective.

4. Procédé selon l'une des revendications précédentes, avec lequel les rampes (32 ; 36) des séquences (30 ; 34) possèdent la même excursion de fréquence (F).

5. Procédé selon l'une des revendications précédentes, avec lequel les spectres (50 ; 52) bidimensionnels calculés séparément pour chacune des séquences (30 ; 34) sont fusionnés en un spectre (56) bidimensionnel des signaux en bande de base (b1 ; b2), lequel est utilisé à l'étape (c) de détermination de valeurs pour la vitesse relative (v).

6. Procédé selon l'une des revendications précédentes, avec lequel une relation selon l'équation

$$\Delta\varphi_{12} \; = \; 2\pi \frac{2}{c} f_0 T_{12} v$$

est utilisée lors du contrôle du déphasage, laquelle met en relation une différence de phase $\Delta\varphi_{12}$ attendue entre la phase de la valeur spectrale du spectre (52) respectif d'une séquence supplémentaire (34) et une phase de la valeur spectrale du spectre (50) de la première séquence (30) avec le décalage dans le temps T12 associé à la séquence supplémentaire (34) et la vitesse relative v, c désignant la vitesse de la lumière et $f_0$ la fréquence d'émission centrale.

7. Procédé selon l'une des revendications précédentes, le carré d'une valeur absolue d'un produit scalaire complexe $a_m^H a(v)$ d'un vecteur de mesure $a_m$ avec un vecteur de commande a(v) dépendant de la valeur v de la vitesse relative étant calculé lors du contrôle du déphasage en vue de vérifier la concordance avec des déphasages attendus, les composantes du vecteur de mesure $a_m$ étant les valeurs spectrales des spectres (50 ; 52) calculés séparément pour les séquences à la position (k, 1) de la crête, $a_m^H$ désignant le vecteur adjoint hermétiquement à $a_m$, et le vecteur de commande a(v) étant un vecteur de commande d'une mesure idéale pour une cible de radar ayant une vitesse relative v, les composantes du vecteur de commande a(v) jusqu'à un facteur de normalisation commun étant respectivement la différence de phase ($\Delta\varphi_{12}$) attendue pour le décalage dans le temps (T12) associé à la séquence (34) respective par rapport à la première séquence (30), les premières composantes du vecteur de commande a(v) étant égales à zéro jusqu'au facteur de normalisation commun.

8. Procédé selon l'une des revendications précédentes, un degré d'une concordance S(v) étant déterminé lors du contrôle du déphasage en vue de vérifier la concordance avec des déphasages attendus conformément à la relation :

$$S(v) = \frac{1}{\sum_{n=1}^{N}\left|a_m^H(n)\right|^2} \sum_{n=1}^{N}\left|a_m^H(n)a(v)\right|^2$$

où N désigne un nombre de canaux de réception utilisés n = 1, ..., N, $a_m(n)$ désignant un vecteur de mesure dont les composantes sont les valeurs spectrales des spectres (50 ; 52) respectivement calculés séparément pour les signaux en bande de base (b1 ; b2) des séquences (30 ; 34) individuelles et pour les canaux de réception n individuels à la position (k, l) de la crête, $a_m^H(n)$ le vecteur adjoint hermétiquement à $a_m(n)$ et a(v) un vecteur de commande de la mesure idéale pour une cible de radar ayant une vitesse relative v.

9. Procédé selon l'une des revendications précédentes, avec lequel, dans le cas d'un défaut du déphasage entre lesdites valeurs spectrales qui correspond à une situation dans laquelle deux cibles de radar ayant des vitesses relatives différentes occupent la même position (k, 1) dans l'au moins un spectre (56) bidimensionnel, la présence du défaut est reconnue au fait qu'un degré de concordance du déphasage avec les déphasages attendus n'est pas atteint.

10. Procédé selon l'une des revendications précédentes, avec lequel une relation linéaire entre l'écart (d) et la vitesse relative (v) de la cible de radar (12) est déterminée à l'aide d'une position (k) de la crête dans la première dimension de l'au moins un spectre (56) bidimensionnel et au moins les valeurs pour la vitesse relative (v) de la cible de radar (12) qui sont périodiques avec la période de vitesse prédéterminée sont déterminées à l'aide d'une position (l) de la crête dans la deuxième dimension de l'au moins un spectre (56) bidimensionnel.

11. Capteur radar FMCW comprenant un dispositif de commande et d'interprétation (22) dans lequel est mis en œuvre un procédé selon l'une des revendications 1 à 10.

**Fig. 1**

**Fig. 2**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012212888 A1
- DE 102012220879 A1
- DE 102009000468 A1
- US 20120235854 A1